Europäisches Patentamt

European Patent Office

Office européen des brevets

(19)

(11) Publication number : **0 003 996**
**B2**

(12) # NEW EUROPEAN PATENT SPECIFICATION

(45) Date of publication of the new patent specification :
27.07.88

(51) Int. Cl.⁴ : **C 08 G 63/72, C 08 J 3/12**

(21) Application number : 79100514.3

(22) Date of filing : 21.02.79

(54) Continuous process for the recovery of polycarbonate from solutions of it, and polycarbonate powders thus obtained.

(30) Priority : 22.02.78 IT 2050978

(43) Date of publication of application :
19.09.79 Bulletin 79/19

(45) Publication of the grant of the patent :
09.03.83 Bulletin 83/10

(45) Mention of the opposition decision :
27.07.88 Bulletin 88/30

(84) Designated contracting states :
BE DE FR GB NL

(56) References cited :
DE-A- 1 604 900
US-A- 2 297 726
US-A- 3 427 370
CHEMIE - INGENIEUR - TECHNIK, vol. 42, no. 1,
January 1970 WEINHEIM H. SCHNOERING: "Isolie-
rung von Polymerisaten aus Nichtwässrigen Lösun-
gen" pages 15-19
Fluidization Engineering (Daigo Kunii, Octave
Levenspiel) John Wiley + Sons Inc. N.Y. 1969 pages
30-31
VDI-Wärmeatlas 1957 pages GG1 to GG9;H
The file contains technical information submitted
after the application was filed and not included in this
specification

(73) Proprietor : **Montedison S.p.A.**
**Patents & Licensing Dept. Foro Buonaparte, 31 P.O.**
**Box 10528**
**I-20121 Milan (IT)**

(72) Inventor : **Govoni, Gabriele**
**63 Via Pilastro**
**Renazzo (Ferrara) (IT)**
Inventor : **Di Drusco, Giovanni**
**1 Via Birolli**
**Milan (IT)**
Inventor : **Corazzari, Canzio**
**250 Via Virgiliana**
**Pilastri (Ferrara) (IT)**
Inventor : **Guardigli, Pierluigi, Dr.**
**46 Via Aguiari**
**Ferrara (IT)**

(74) Representative : **Zumstein, Fritz sen., Dr. et al**
**Bräuhausstrasse 4**
**D-8000 München 2 (DE)**

Jouve, 18, rue St-Denis, 75001 Paris, France

## Description

The present invention concerns a continuous process for the recovery of polycarbonate from solutions thereof in organic solvents.

Numerous methods have been suggested for the separation of polycarbonate and, in general, of polymers from their solutions in organic solvents.

According to one of the methods, the polymer solution is dispersed in water and the solvent is distilled in a stream of steam. The drawbacks involved by this method is the high consumption of energy, due to the necessity of repeating several times the procedure in order to achieve a substantial removal of the solvent, and, above all, the fact that the product obtained contains considerable quantities of water which must subsequently be removed by means of long and expensive drying processes.

Still another method, of the « spray drying » type, consists in atomizing the solution in a stream of hot inert gases, so as to facilitate the removal of the solvent.

Such a method requires the use of equipment having a low specific productivity and the use of great volumes of heated gases, while it allows to obtain products with a low apparent density.

A further method consists in removing the solvent by feeding a concentrated solution of polycarbonate into one or more heated apparatuses, in particular into extruder in which there are foreseen degassing zones under vacuum for the volatilized solvents.

Said method involves rather high operational costs or overheads and investment expenditures for the necessary special equipment.

According to U.S.P. 3 427 370 a polycarbonate solution is dispersed in water and the dispersion mixed with steam is passed into an elongated conduit. The mixture is maintained above the boiling point of the solvent thereby obtaining solid polycarbonate particles dispersed in water from which these are separated by filtration.

Such a method requires the use of great quantities of water and of consequence involves high operational costs due to the necessity of separating the polycarbonate from water by filtration and of drying the product which is highly saturated with water. In addition said method does not permit to obtain products with a high apparent density.

There has now been found a process for separating the polycarbonate from its solutions in organic solvents, a process that allows to avoid the drawbacks of the previous separation methods and permits to obtain the removal of the solvent with low consumptions of steam, thereby achieving a very high productivity in equipment of very limited dimensions.

Thus, one object of this invention is moreover that of obtaining solid polycarbonate particles of a high apparent density, substantially free of organic solvent and with a low moisture content.

Another object of this invention is that of obtaining polycarbonate particles having a controlled morphology and a controlled granulometry, and which may be used directly in the extrusion equipment.

Still another object is that of avoiding, during the separation of the polycarbonate, the degrading phenomena and modifications of the qualities peculiar to the polycarbonates itself, such as the transparency, thermal stability, colour.

All the aforesaid objects and still further ones are achieved by means of a continuous process consisting of the following stages :

a) feeding the solution of polycarbonate in organic solvent(s), at a temperature comprised between 0 and 120° C, through one or more feeding ducts into the restricted zone or into the diverging stretch of a convergent-divergent nozzle of the De Laval type through which water vapour passes at respectively sonic and ultrasonic speed, maintaining feeding weight ratios steam/polycarbonate solution of 1/1 to 1/5, with formation of a dispersion of minute particles of solution in the vapour ;

b) continuously feeding of the resulting dispersion of stage a) to a heat exchanger of the pipe-in-pipe type, directly connected to the diverging stretch of the nozzle, said exchanger having a mean thermal exchange coefficient of 500-1 500 Kcal/hr m$^2 \cdot$ °C and an increasing cross-section along its length, and in which the dispersion, maintained at 100° to 140 °C for dwell times between 0.05 and 5 seconds, has a flow rate of at least 90 m/sec in the initial stretch and from 10 to 50 m/sec in the final stretch ; thereby obtaining a dispersion of minute solid particles of polycarbonate dispersed in the vapour phase consisting of a solvent and water steam ;

c) separating the solid particles from the vapours in a cyclone ;

d) drying the solid in a superheated water vapour fluid bed.

According to the present process there may be conveniently used solutions having a concentration in polycarbonate of up to 30 % by weight.

In particular, very suited for the purpose proved the use of solutions with a low concentration of polycarbonate of high molecular weight such as are directly obtained according to known synthesis processes carried out in the presence of a solvent of the polymer.

An example of such solutions are the solutions obtained by interfacial polycondensation of bisphenol-A using as a solvent preferably methylene chloride and in general containing up to 20% by weight of polycarbonate.

It is also possible to feed polycarbonate solutions containing in a dispersion mineral fillers and/or inorganic pigments such as for instance glass fibres, asbestos, mica, and metal oxides. In this case, the powders or the particles of polycarbonate thus obtained, contain the above mentioned fillers in a state of homogeneous dispersion, with the advantage that thereby are avoided subsidiary operations of homogenization before granulation as on the contrary are required in the techniques of the Prior Art whenever such fillers are added to the polymer powder.

In the exchanger of stage b) there takes place the solidification of the polycarbonate which latter separates from the solvent in the form of particles whose morphology and apparent density may be controlled by acting on the operational conditions indicated both for stage a) as well as for stage b) which are tightly connected with each other.

More particularly, it has been observed that if the heat exchanger preferably has a spiral-like course or if it is of the rectilinear type alternated by at least five curved stretches with a ratio of the diameter of curvature, related to the diameter of the spiral of 10-20, there will be obtained a much more accurate control of the morphology of the product and the best results as far as the removal of the solvent, the granulometric distribution and the apparent density of the polycarbonate particles are concerned.

The process may also be carried out with a heat exchanger consisting of a rectilinear tube or pipe. It is also possible to feed the solution of polycarbonate in several successive points of the course of the exchanger pipe of stage b), through convergent-disconvergent nozzles of the De Laval-type inserted in said heat exchanger and through which in this case will flow through the dispersion resulting from stage a).

In this way exploiting the thermal content and the kinetic energy present in the heat exchanger after a first separation had occurred and the solidification of the polycarbonate particles had taken place, it is possible to separate and solidify further polymer with the advantage of further reducing the specific consumption of steam.

The particles of polycarbonate that form at the beginning during stage b) of this process, attain rapidly a sufficiently solid consistency and do not suffer any morphological modifications when during their flow through the heat exchanger they meet further polycarbonate solution introduced into the heat exchanger successively.

Consequently, with the said feeding in several points, one obtains a product in the form of powders or particles with characteristics similar to those obtained by means of one single feeding of polymer solution, but with the advantage of being able to operate with steam/solution ratios that may attain 1/7 kg/kg.

The particles or powder of the polycarbonate obtained after separation of the vapour phase, contain still traces of solvent, which traces may be removed successively according to a method, and this represents a further aspect of this invention, which consists in conveying those particles into a drying apparatus operating on a fluid bed fed with superheated water vapour, with short dwell times.

By the present process it is possible to obtain polycarbonate powders or particles having an apparent density comprised between 0.2 and 0.4 kg/cu. dm, a resting angle below 40°, and being free of organic solvent (less than 10 ppm) and a moisture level generally below 0.5 % by weight.

The possibility to obtain polycarbonate powders having the above said characteristics, gains a considerable importance in as much as said powders may be directly fed into standard extrusion equipment for the subsequent granulation phase, without suffering, for instance, phenomena of clogging or pulsing, thus achieving a regularity in the running of the extrusion equipment, with a consequential increase of the hourly output.

It must be noted that all the stages and operational conditions of this process are closely integrated with each other in order to obtain an effective and cheap recovery of the polycarbonate as well as for obtaining polycarbonate powders having the above indicated characteristics.

Moreover, the drying of the polymer in a fluid bed by means of superheated water vapour, gives excellent results just because of the fact that one operates on polycarbonate powders having the morphological characteristics that result from having carried out the previous stages a) and b).

In fact, if the polycarbonate powder is prepared by methods different from those of this invention, it is not possible to remove the solvent in a sufficiently effective way on the fluid bed by just using superheated water vapour.

The use of superheated water vapour according to the present invention, instead of hot inert gases, results on the other hand in a considerable further saving of energy.

The equipment used for realizing this process is of very limited dimensions and thus proves to be very compact, simple and flexible for the handling, and in which the separation of the polycarbonate powder takes place in a continuous cycle, with operational times that are very short and with a low consumption of energy, in particular of steam, thereby achieving conditions of high productivity in a very economical way.

In the figures described in the following the heat exchanger (4) is directly connected to the diverging zone of the nozzle.

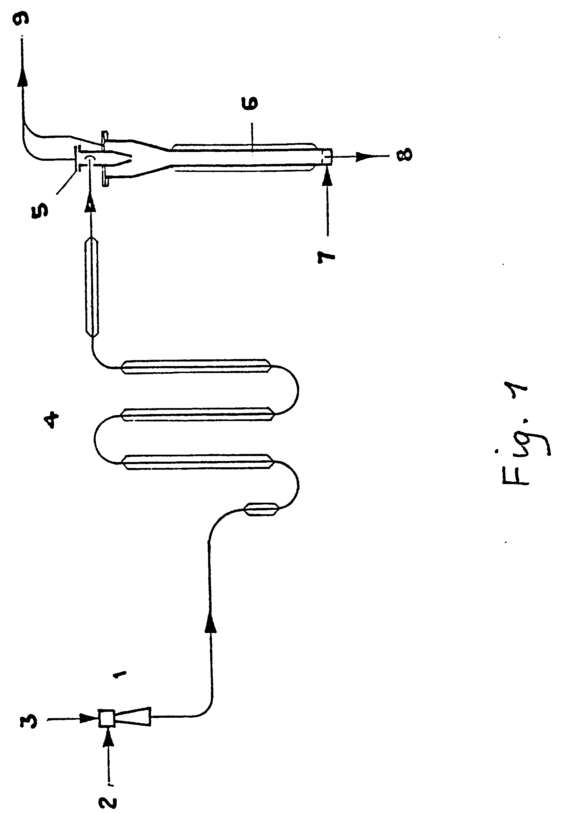

In figure 1 is represented an apparatus for the realization of the process according to this invention.

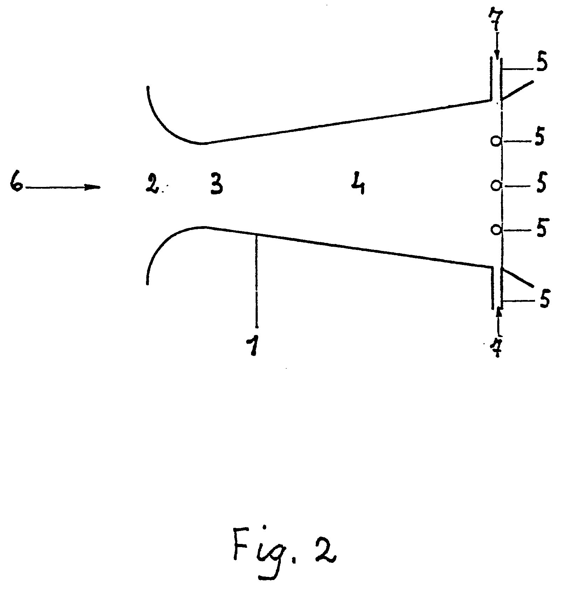

In this figure is shown nozzle (1) to which are fed in the direction of arrow (3) the superheated water vapour and in the direction of arrow (2) the polycarbonate solution ; the heat exchanger (4) through which runs the dispersion obtained at the outlet of the nozzle; cyclone (5) which receives the dispersion flowing out of the exchanger ; fluid bed (6) fed from above with the polycarbonate powder separated in the cyclone, and from below with the superheated vapour in the direction of arrow (7). Moreover, fig. 1 shows the outflow, in the direction of arrow (8), of the dried polycarbonate powder and the outlets for the solvent vapours and the water vapour according to arrow (9). In figure 2 is illustrated, for exemplifying and not limiting purposes, a nozzle of the nozzle type suited for the embodiment of this invention.

In this figure is shown a nozzle (1) through which in the direction of arrow (6) water vapour passes ; the converging zone (2), the restricted cross-section (3) and the diverging zone (4) of said nozzle into which lead the feeding ducts (5) feeding the polycarbonate solution in the direction of arrow (7).

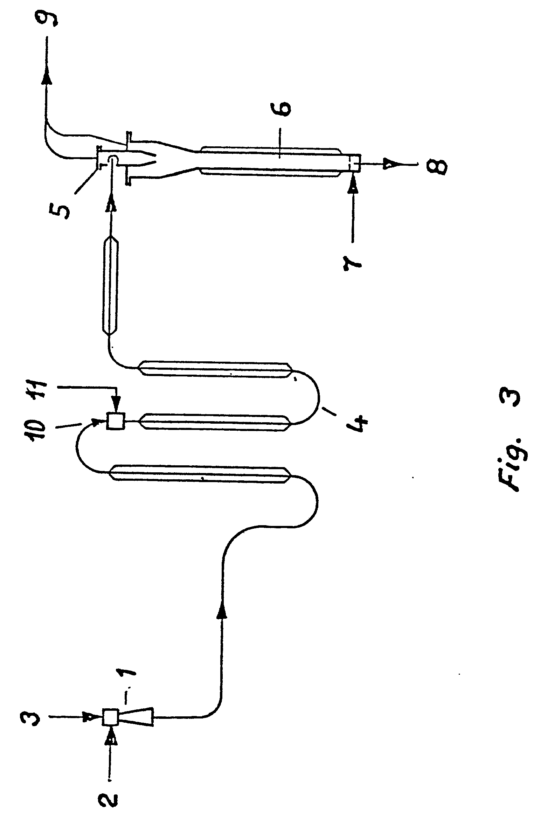

Figure 3 illustrates an equipment for the practical embodiment of this process, which, with respect to the one illustrated in Figure 1, comprises a variant by which into the heat exchanger tube there has been inserted a convergent-divergent nozzle (10) of the De Laval-type into which is fed, in the direction of the arrow (11), a further quantity of polycarbonate solution that thus joins the flow of the dispersion, obtained in stage a), which flows through the nozzle longitudinally.

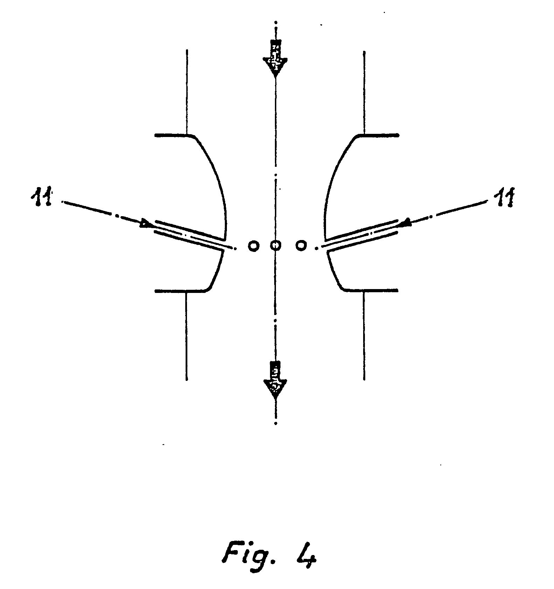

Figure 4 represents a type of nozzle to be inserted into the heat exchanger in the case of a plurality of feeding points for the polycarbonate solution according to the variant illustrated in Figure 3.

In this latter can be seen the ducts or channels (11) for the feeding of further quantities of polymer solution.

In the following are given some illustrative but not limiting examples of the described invention.

Example No. 1

With reference to Figure 1, to nozzle (1) were simultaneously fed :

— in the direction of arrow (3), 100 kg/hr of water vapour, at a pressure of 14 kg/sq.cm and at a temperature of 200°C, and

— in the direction of arrow (2), in particular in the diverging stretch of the De Laval nozzle, 200 kg/hr of polycarbonate solution at 25°C, consisting of 12 % by weight of polycarbonate obtained by interfacial condensation of bisphenol-A having an inherent viscosity of 0.52 (determined at 30°C in paradioxane at a concentration of 0.5 g/100 cc), and 88 % by weight of methylene chloride.

The thus obtained dispersion passed directly into the heat exchanger (4), which consisted of a sleeved spiralling tube with a spiral diameter growing from 0.95 to 2.54 cm (3/8 to 1 inch), and realized with three cross-section increments. The exchange surface of the spiral amounts to 0.3 m². The fluid running in the sleeve is equal to 170°C. The dispersion, in the first stretch of heat exchanger has a temperature of 108°C and a flow rate of 120 m/sec while in the last stretch of the exchanger the temperature equals 125°C while the flow rate is 30 m/sec.

The total dwell time of the dispersion in the heat exchanger amounts to 0.15 seconds.

At the outflow from the exchanger, the dispersion flows into cyclone (5) where the vapours separate at a temperature of 125°C from the polycarbonate which gathers at the base of the cyclone in the form of solid particles having a humidity content of 5 % by weight and a residual content of methylene chloride of 1 % by weight.

For the above described operational conditions there was calculated a thermal exchange coefficient of the spiral tube of 1000 Kcal/hr m² °C.

The polycarbonate particles, separated at the base of the cyclone, were then conveyed into the fluid bed dryer (6) where the superheated vapour fed in the direction of arrow (7) met them in countercurrent.

The particulated polycarbonate that is obtained at the outlet (8) of the dryer, has a moisture content of 0.3 % by weight, a residual content of methylene chloride below 10 ppm, an apparent density of 0.35 kg/cu.dm, a granulometric range of the particles comprised between 300 µ and 3 mm and a resting angle of 36°.

Example No. 2

With reference to Figure 1, nozzle (1) was contemporaneously fed with :

— in the direction of arrow (3), 140 kg/hr of water vapor at a pressure of 14 kg/sq.cm and at a temperature of 200°C, and

— in the direction of arrow (2), in particular in the diverging stretch of the De Laval nozzle, 700 kg/hr of polycarbonate solution at a temperature of 20°C, consisting of 12 % by weight of polycarbonate obtained by interfacial polycondensation of bisphenol-A and having an inherent viscosity of 0.52 (in paradioxane at 30°C and at a concentration of 0.5 g per 100 cc), and 88 % by weight of methylene chloride.

The dispersion obtained at the outlet of the nozzle was directly conveyed into the tubular heat exchanger (4) consisting of stretches of sleeved pipes alternated by 5 elbow connections, at 180°C. The diameter of the pipe or tube is growing from 1.9 cm (3/4 inch) to respectively 2.54, 3.81, 5.08 cm (1, 1.5, 2 inch) with 3 cross-section increases.

The heat exchanging surface of the tube amounts to 1.8 sq.m. The temperature of the fluid in the sleeve is equal to 170°C. In the first stretch of the heat exchanger the dispersion has a temperature of 110°C and a flow rate of 100 m/sec, while in the final stretch of the exchanger the temperature equals 135°C and has a flow rate of 40 m/sec.

The total dwell time of the dispersion in the exchanger amounts to 0.35 seconds.

At the outlet of the exchanger, the dispersion passes into a cyclone (5) where at 135 °C there separates a vapor phase and at the base of the cyclone there separates a solid phase consisting of solid polycarbonate particles with a moisture content of 15 % by weight and a residual methylene chloride content of 1.5 % by weight.

At the above described operational conditions there was calculated a thermal exchange coefficient for the tubular heat exchanger of 500 Kcal/hr.sq.m °C.

The polycarbonate particles separated at the base of the cyclone were then conveyed into the fluid bed dryer (6) fed with superheated vapour coming from (7).

The particulated polycarbonate that was obtained at the outlet (8) of the dryer showed a moisture content of 0.5 % by weight, a residual methylene chloride content of less than 10 ppm, an apparent density of 0.25 kg/cu.dm, a granulometric distribution of the particles comprised between 1 and 6 mm and had a rest angle of 40°.

Example No. 3

With reference to Figure 3, to nozzle 1 were simultaneously fed :

— in the direction of arrow 3, 140 kg/h of water vapour at a temperature of 200°C ; and

— in the direction of arrow 2, and in particular in the diverging tract of the De Laval nozzle, 600 kg/h of solution containing 12 % by weight of polycarbonate obtained as in Examples 1 and 2, at a temperature of 20 °C.

The dispersion thus obtained passes directly into the heat exchanger tube (4) described in Example 2.

Further solution of polycarbonate was fed through nozzle (10) at a feed rate of 350 kg/h.

The speed of the suspension in the relief of the nozzle (10) amounted to 140 m/sec.

The temperature in the end section of the heat exchanger was 130 °C while the temperature inside the sleeve amounted to 170°C, throughout the heat exchanger.

The polycarbonate particles separated at the base of the cyclon (5), flow into the fluid bed dryer fed with superheated steam coming from (7).

The solid polycarbonate particles that are obtained have a moisture content of 0.5 % by weight, a residual content in methylene chloride of less than 10 ppm, an apparent density of 0.25 kg/cu.dm. The granulometric size distribution of the particles is comprised between 1 and 6 mm and the resting angle equals 40°.

## Claims

1. Continuous process for the recovery of a polycarbonate from its solution in organic solvent(s) by the use of steam, characterized in that said process consists of the following stages :

a) feeding the polycarbonate solution possibly containing dispersed mineral fillers and/or inorganic pigments, at a temperature between 0° and 120°C, through one or more feeding ducts into the restricted zone or the diverging stretch of a convergent-divergent nozzle of the De Laval-type through which water vapour passes at respectively sonic or ultrasonic speed, maintaining feeding weight ratios vapour/polycarbonate solution of 1/1 to 1/5, with formation of a dispersion of particles of solution in the vapour ;

b) continuously feeding the dispersion resulting from stage a) to a pipe-in-pipe heat exchanger, directly connected to the diverging stretch of the nozzle, said heat exchanger having a mean thermal exchange coefficient of 500 to 1500 kcal/hr.sq.m. °C, and an increasing cross-section along its length, and in which exchanger the dispersion, maintained at 100-140 °C for dwell times between 0.05 and 5 seconds, has a flow rate of at least 90 m/sec in the initial stretch and from 10 to 50 m/sec in the final stretch ; thereby obtaining solid minute polycarbonate particles dispersed in the vapour phase consisting of the vapours of the solvent and of water vapour ;

c) separating the solid particles from the vapours in a cyclone ;

d) drying of the solid in a superheated water vapour fluid bed.

2. Process according to claim 1, characterized in that the heat exchanger of the pipe-in-pipe type develops a course of the spiral type or of the rectilinear type alternated by at least five curved stretches having a ratio of the diameter of curvature as referred to the diameter of the spiral, of 10-20.

3. Process according to the preceding claims, characterized in that into the heat exchanger, simultaneously with the dispersion, there are fed further quantities of polycarbonate solution, through one or more De Laval-type nozzles inserted in one or more points of the course of said heat exchanger.

4. Polycarbonate powders obtained according to the process as claimed in the above preceding claims.

**Patentansprüche**

1. Kontinuierliches Verfahren zur Gewinnung eines Polycarbonats aus seiner Lösung in organischem Lösungsmittel bzw. organischen Lösungsmitteln unter Verwendung von Wasserdampf, dadurch gekennzeichnet, daß das Verfahren aus den folgenden Stufen besteht :

a) Zufuhr der möglicherweise dispergierte Mineralfüllstoffe und/oder anorganische Pigmente enthaltenden Polycarbonatlösung bei einer Temperatur zwischen 0°C und 120°C durch ein oder mehrere Beschickungsleitungen in die eingeengte Zone oder den divergierenden Abschnitt einer konvergent-divergenten Düse vom De Laval-Typ, durch die Wasserdampf mit Schall-bzw. Ultraschallgeschwindigkeit strömt, unter Aufrechterhaltung von Dampf/Polycarbonatlösung-Gewichtsverhältnissen von 1/1 bis 1/5 unter Bildung einer Dispersion der Teilchen der Lösung in dem Dampf ;

b) der kontinuierlichen Zufuhr der aus der Stufe a) hervorgegangenen Dispersion zu einem Rohr-in-Rohr-Wärmeaustauscher, der direkt mit dem divergierenden Abschnitt der Düse verbunden ist, wobei der Wärmeaustauscher einen mittleren Wärmeaustauschkoeffizienten von 500 bis 1500 kcal/Std. · m² · °C besitzt und einen entlang seiner Länge zunehmenden Querschnitt aufweist, und wobei in dem Wärmeaustauscher die für Verweilzeiten zwischen 0,05 und 5 Sekunden bei 100 bis 140 °C gehaltene Dispersion eine Fließgeschwindigkeit von zumindest 90 m/sec. in dem Abschnittsbeginn und von 10 bis 50 m/sec. in dem Abschnittsende besitzt ; wobei man hierdurch feste sehr kleine Polycarbonatteilchen erhält, die in der aus den Dämpfen des Lösungsmittels und dem Wasserdampf bestehenden Dampfphase dispergiert sind ;

c) der Abtrennung der festen Teilchen von den Dämpfen in einem Zyklon ;

d) der Trocknung des Feststoffs in einem überhitzten Wasserdampf-Wirbelbett.

2. Verfahren gemäß Anspruch 1, dadurch gekennzeichnet, daß der Wärmeaustauscher vom Rohr-in-Rohr-Typ einen Verlauf vom Spiralen-Typ oder vom geradlinigen Typ in Abwechslung mit zumindest fünf gekrümmten Abschnitten mit einem Verhältnis des Krümmungsdurchmessers in Bezug auf den Durchmesser der Spirale von 10 bis 20 aufweist.

3. Verfahren gemäß den vorhergehenden Ansprüchen, dadurch gekennzeichnet, daß in den Wärmeaustauscher gleichzeitig mit der Dispersion weitere Mengen an Polycarbonatlösung durch eine oder mehrere Düsen vom De Laval-Typ, die an ein oder mehreren Stellen des Verlaufs des Wärmeaustauschers eingesetzt sind, zugeführt werden.

4. Polycarbonatpulver, erhalten nach dem Verfahren gemäß den vorhergehenden Patentansprüchen.

**Revendications**

1. Procédé continu de récupération d'un polycarbonate de ces solutions dans de(s) solvant(s) organique(s) grâce à l'emploi de vapeur, caractérisé en ce que ce procédé comprend les étapes suivantes :

a.-alimentation de la solution de polycarbonate contenant éventuellement des charges minérales et/ou pigments minéraux dispersés, à une température comprise entre 0 et 120°C, dans un ou plusieurs conduits d'alimentation dans la zone limitée ou la partie divergente d'une tuyère convergente-divergente de type De Laval dans laquelle passe de la vapeur d'eau aux vitesses respectivement sonique ou ultra-sonique, les rapports pondéraux d'alimentation vapeur/solution de polycarbonate étant maintenus entre 1/1 et 5/1 en donnant lieu à la formation d'une dispersion de particules de solution dans la valeur ;

b.-alimentation continue de la dispersion résultant de l'étape a. dans un échangeur de chaleur du type conduit-dans-conduit, directement relié à la partie divergente de la tuyère, cet échangeur présentant un coefficient d'échange thermique moyen compris entre 500 et 1.500 kcal/h.m°C et une section croissante sur sa longueur, dans cet échangeur la dispersion, maintenue à une température comprise entre 100 et 140°C pour une durée de séjour comprise entre 0,05 et 5 secondes présentant un débit d'au moins 90 m/s dans la partie initiale puis compris entre 10 et 50 m/s dans la partie finale, de façon à conduire à l'obtention d'une dispersion de particules solides discrètes de polycarbonate dispersées dans la phase vapeur consistant en un solvant et de la vapeur d'eau ;

c.-séparation des particules solides contenues dans la vapeur dans un cyclone ;

d.-séchage du solide dans un lit fluidisé chauffée à l'aide de vapeur d'eau.

2. Procédé selon la revendication 1, caractérisé en ce que l'échangeur thermique du type conduit-dans-conduit se présente sous forme d'une spirale ou hélice ou sous forme linéaire, alterné d'au moins cinq parties courbées, le rapport du diamètre de la courbe par rapport au diamètre de la spirale étant de 10 à 20.

3. Procédé selon les revendications précédentes, caractérisé en ce que dans l'échangeur thermique en même tant que la dispersion sont introduites des quantités supplémentaires de solution de polycarbonate, par l'intermédiaire d'une ou plusieurs tuyères de type De Laval disposées dans un ou plusieurs points dudit échangeur de chaleur.

4. Poudres de polycarbonate obtenues à l'aide du procédé tel que revendiqué dans les revendications précédentes.

Fig. 1

0 003 996

Fig. 2

Fig. 3

0 003 996

Fig. 4